# EUROPÄISCHE PATENTSCHRIFT

(11) **EP 2 281 457 B1**
(45) Veröffentlichungstag und Bekanntmachung des Hinweises auf die Patenterteilung: **15.08.2012**
(21) Anmeldenummer: 09179159.0
(22) Anmeldetag: 15.12.2009
(51) Int. Cl.: A01N 25/02, A01N 59/00, A01N 59/08

(54) **Verfahren zur physikalischen Pflanzen-Behandlung**
Method for physical treatment of plants
Procédé de traitement physique des plantes

(30) Priorität: 03.08.2009 DE 102009028188
(43) Veröffentlichungstag der Anmeldung: 09.02.2011
(73) Patentinhaber: Simply Water GmbH, 93055 Regensburg (DE)
(72) Erfinder: Philipps, André, 93059 Regensburg (DE)
(74) Vertreter: Bublak, Wolfgang

(56) Entgegenhaltungen:
- WO-A2-2008/101364
- DE-A1-102007 017 502
- JP-A- 8 056 523
- JP-A- 8 109 107
- JP-A- 2000 015 258
- JP-A- 2000 016 903
- JP-A- 2002 104 908
- KR-A- 20050 008 480
- KR-A- 20090 058 268

## Beschreibung

Die vorliegende Erfindung betrifft ein Verfahren zur physikalischen Pflanzen-Behandlung mittels elektrostatischer Ladung, bei dem eine Übertragung der elektrostatischen Ladung über ein mittels Influenzverfahren behandeltes Wasser erfolgt.

Zur Bekämpfung von Erkrankungen bei Pflanzen werden im Stand der Technik unterschiedliche Verfahren bzw. Substanzen mit chemischer bzw. biologischer Wirkung eingesetzt. Dabei werden bevorzugt substituierte Heterozyklen, wie z.B. Pikolinamidderivate, eingesetzt. Weiterhin werden Fenbutatin-oxid, Pyrimethanil, Fludioxonil, Cyprodinil oder Fenhexamid eingesetzt. Manche dieser bekannten Verbindungen weisen jedoch den Nachteil auf, dass es sich dabei um toxische Produkte handelt, was jegliche Verwendung dieser Verbindungen in der Landwirtschaft zum Ausmerzen von phytopathogenen Krankheiten von Kulturpflanzen ausschließt oder zumindest erheblich einschränkt. Andere dieser Verbindungen stammen aus Fermentationsrückständen und weisen relativ komplexe chemische Strukturen auf. Bei der Herstellung und Isolation dieser Verbindungen handelt es sich daher nach wie vor um komplizierte, teure Arbeitsschritte, wodurch es häufig unwirtschaftlich wird, sie industriell darzustellen bzw. auf den Markt zu bringen. Darüber hinaus ist zur Markteinführung solcher Verbindungen im Pflanzenschutz in der Regel ein umfangreiches und aufwändiges Zulassungsverfahren erforderlich.

In diesem Zusammenhang beschreiben die WO 2008/101364 A2 sowie die DE 10 2007 017502 A1 ein Pflanzenschutverfahren sowie ein elektrochemisch behandeltes Wasser.

Hiervon ausgehend ist es Aufgabe der vorliegenden Erfindung, ein Verfahren zur Verfügung zu stellen, welches die Erkrankungen von Pflanzen wirksam bekämpft, toxikologisch unbedenklich ist, und somit bedenkenlos im Kulturpflanzenbereich, insbesondere in der Landwirtschaft, eingesetzt werden kann.

Gelöst wird diese Aufgabe mit dem Merkmal des Patentanspruches 1. Vorteilhafte Aus- und Weiterbildungen, welche einzeln oder in Kombination miteinander eingesetzt werden können, sind Gegenstand der Unteransprüche.

Die vorliegende Erfindung löst die gestellte Aufgabe dadurch, dass sie ein Verfahren zur physikalischen Pflanzen-Behandlung mittels elektrostatischer Ladung bereitstellt, bei dem eine Übertragung der elektrostatischen Ladung über ein mittels Influenzverfahren behandeltes Wasser erfolgt, wobei das Wasser durch die Behandlung mittels Influenzverfahren Wassercluster mit einem Elektronenmangel aufweist, wobei das mittels Influenzverfahren behandelte Wasser durch folgende Verfahrensschritte erhältlich ist:
Einbringen des zu behandelnden Wassers in ein galvanisches Element, Ausrichtung der Ladungen und freien Elektronen im elektrischen Feld, Trennung der Ladungen durch Bewegung und der daraus resultierender Influenz und
Sammlung und Abführung der de-elektronisierten, positiv geladenen Fraktion.

Dadurch wird gegenüber dem Stand der Technik eine erhebliche Verbesserung erzielt. Das erfindungsgemäße Verfahren bekämpft wirksam Erkrankungen, ist aber zugleich für die Umwelt unbedenklich. Das Verfahren zur physikalischen Pflanzen-Behandlung der Erfindung zeigt keinerlei toxische Wirkungen auf umgebende Tiere, Pflanzen oder auch Verbraucher. Das Verfahren weist oxidative Produkte in einem so extrem geringen Anteil auf, dass die Wirkung auf einem anderen Effekt beruhen muss. Es kann davon ausgegangen werden, dass die Wirkung des wie oben beschriebenen behandelten Wassers auf der Anregung des Wassermoleküls selbst beruht. Die Wassermoleküle befinden sich in einem Clusterverband, der sich aufgrund der elektrostatischen Dipol-Struktur des Wassermoleküls ausbildet. Durch die Durchführung einer Influenz werden Wassermoleküle elektrisch entladen und die erzeugten Ladungsträger im Clusterverband durch ständigen Austausch stabilisiert (Grotthus-Mechanismus). Das derart elektrisch entladene Wasser kann daher desinfizierend wirken, da es imstande ist, Zellstrukturen zu denaturieren bzw. die Elektronentransportmechanismen von Mikroorganismen irreversibel zu stören. Dies ist einer der Gründe für die fehlende Resistenzbildung von Mikroorganismen oder Pilzen.

Durch die dergestalt produzierte Elektronenarmut werden die Wassercluster (zusammenhängende Wassermoleküle durch Magnetwirkung des Wassermoleküldipols) elektrisch entladen. Es entstehen positiv geladene Wassercluster, die als Elektronenakzeptoren fungieren, der sog. Elektronenhunger. Dieser sättigt sich an einem Elektronendonator, z.B. jede Form von Einzellern.

In einer bevorzugten Ausführungsform ist der Effekt des Verfahrens zur physikalischen Pflanzen-Behandlung durch Behandlung der Lösung mit Röntgenstrahlung auslöschbar. Es konnte beobachtet werden, dass mittels Influenzverfahren behandeltes Wasser, das mit dem Flugzeug verschickt wurden, keine Wirkung hatten. Oxidative Zwischenprodukte, die beispielsweise bei einer Elektrolyse entstehen, sind gegen Röntgenstrahlung unempfindlich. Eine Röntgenbehandlung stellt einen starken Elektroneneintrag dar. Es kann davon ausgegangen werden, dass durch die Röntgenbehandlung der Elektronenmangel, der sog. Elektronenhunger, ausgeglichen wird. Eine dergestalt behandeltes Wasser weist keine physikalische Wirksamkeit mehr auf. Somit kann eine Empfindlichkeit des Wassers gegenüber der Röntgenstrahlung als Nachweis eines Elektronenmangels dienen. Nur solches Wasser, das auf Behandlung mit Röntgenstrahlung mit Wirkungsverlust reagiert, wirkt durch Elektronenhunger.

Es hat sich als vorteilhaft erweisen, wenn das Verfahrens zur physikalischen Pflanzen-Behandlung eine fungizide und/oder bakterizide und/oder viruzide und/oder sporozide Wirkung aufweist. Dadurch kann eine besonders umfassende und effektive physikalische Pflanzenbehandlung erzielt werden.

In einer weiteren bevorzugten Ausführungsform umfasst das Wasser Natriumchlorid. Durch den Zusatz von Natriumchlorid wird die Influenz erleichtert, da die Leitfähigkeit des Wassers eingestellt werden kann.

In einer besonders bevorzugten Ausführungsform ist die Influenz mit einer Stromdichte von 0,5 bis 10 W pro cm² durchführbar.

Es hat sich als besonders vorteilhaft erwiesen, wenn das Verfahren zur physikalischen Pflanzen-Behandlung zur Bekämpfung von Pflanzen-Erkrankungen eingesetzt wird.

Dabei ist es insbesondere von besonderem Vorteil, wenn das Verfahren zur Bekämpfung von Pilzerkrankungen und/oder viralen Erkrankungen und/oder bakteriellen Erkrankungen und/oder Sporenerkrankungen bei Pflanzen verwendet wird.

Von ganz besonderem Vorteil ist das Verfahren bei der Bekämpfung von Botrytis und/oder Krautfäule. Botrytis (Botryotinia) ist eine kosmopolitische Gattung der Schlauchpilze (Ascomycota). Alle Arten sind bedeutende Pflanzenschädlinge, ein besonders bekannter Vertreter ist die Grauschimmelfäule (Botrytis cinerea) mit einem sehr großen Wirtspflanzenkreis. Botrytisarten leben als Parasiten und injizieren dabei eine Apoptose der befallenen Zellen im befallenen Gewebe der infizierten Pflanzen. Dies führt zum fortschreitenden Zerfall des Gewebes. Für die menschliche Gesundheit stellt Botrytis vor allem durch sein hohes allergenes Potential eine Gefährdung dar. Die Gattung zählt zu den bedeutendsten aller Gene unter den Schimmelpilzen. Die Krautfäule wird insbesondere durch Phytophthora infestans, eine Protistenart aus der Abteilung der Eipilze (Oomycota) hervorgerufen. Dieses Pathogen ist bezüglich seiner Wirte hoch spezialisiert. Befällt dieser Parasit Tomaten, wird von einer Kraut- bzw. Braunfäule gesprochen; befällt er hingegen Kartoffeln, spricht man von einer Kraut- und Knollenfäule. Bei Kartoffeln führt der Befall zu erheblichen Ertragsausfällen, die bis zu 20 % eines durchschnittlichen Ertrages vernichten können. Mitte der 40er Jahre des 19. Jahrhunderts vernichtete eine Phytophthora-Epidemie fast die gesamte Kartoffelernte in Irland. Es kam zur großen Hungersnot in Irland, die mehr als 1 Mio. der damals über 8 Mio. irischen Einwohner tötete. Die beiden beschriebenen Erkrankungen können durch Anwendung des Verfahrens wirksam und umfassend bekämpft werden. Von besonderem Vorteil ist es dabei, dass das eingesetzte Verfahren toxikologisch völlig unbedenklich ist.

Von besonderem Vorteil ist es weiterhin auch, wenn das Verfahren für die vorbeugende oder kurative Bekämpfung von phytopathogenen Erregern angewendet wird, welches sich dadurch auszeichnet, dass man eine Menge eines mittels Influenzverfahren behandelten Wassers auf die Pflanzensamen und/oder Pflanzenblätter und/oder Früchte der Pflanzen und/oder auf den Boden, auf dem die Pflanzen wachsen und/oder wachsen sollen, aufbringt.

Besonders vorteilhaft ist es dabei, wenn das Verfahren für die vorbeugende und/oder kurative Bekämpfung von phytopathogenen Erregern bei Erkrankung durch Pilze und/oder Viren und/oder Bakterien und/oder Sporen eingesetzt wird.

Weitere Vorteile und Ausgestalten der Erfindung werden im Folgenden anhand der Ausführungsbeispiele veranschaulicht.

Das erfindungsgemäße Verfahren zur physikalischen Pflanzen-Behandlung mittels elektrostatischer Ladung wird wie folgt durchgeführt. Zum besseren Verständnis werden die physikalischen Grundlagen ebenfalls kurz erläutert.

Das Verfahren beruht auf der Eigenschaft von Mikroorganismen, negative Ladungen zu tragen.

Basierend auf der Erzeugung einer Influenz in einem elektrischen Feld (elektrostatische Induktion) werden in Wasser Ladungsträger separiert und negative Ladungsträger zu einem gewissen Teil abgeführt. Aufgefangen wird schließlich die Fraktion mit einer positiven elektrostatischen Ladung. Auf diese Weise können die positiv geladenen Ladungsträger weitergegeben werden, so dass sie schließlich auf ein mit Mikroorganismen kontaminiertes Gut applizierbar sind.

In Kontakt mit Mikroorganismen kommt es zu einem Ladungsaustausch in Form eines Stromschlages. Innerhalb von Sekundenbruchteilen wird die Porenfunktion des Einzellers irreversibel geschädigt. Der Mikroorganismus ist dann nicht mehr lebensfähig. Die Abtötung des Mikroorganismus beruht somit auf einer Auslösung eines Stromschlages, welche durch eine Übertragung elektrostatischer Ladung erfolgt.

Wassermoleküle sind bekanntermaßen Dipole, deren entgegengesetzt geladene Enden sich anziehen. So entstehen zunächst Dimere, die seit 1961 als Zundel-Kation bezeichnet werden. Diese lagern sich zu größeren Verbänden zusammen, den sog. Clustern. Cluster sind eine Untergruppe der van-der-Waals-Körper, da diese durch London-van-der-Waals-Kräfte zusammengehalten werden. Dabei ist die Größe der Cluster u.a. abhängig vom Ort im Wasser, an dem sie sich befinden. An der Oberfläche sind es zum großen Teil flächige Mikrocluster aus 2 bis 12 Molekülen, je tiefer die Cluster liegen, umso mehr nehmen sie an Größe zu. Man unterscheidet "Kleine Cluster" aus 10 bis 100, "Große Cluster" aus 100 bis 1000 und "Kleine Tröpfchen" oder "Kristalle" aus mehr als 1000 Wassermolekülen.

Wesentlich für van-der-Waals-Cluster ist deren Eigenschaft, das Elektron nicht mehr an die Orbitale und Schalen ihrer Mutter-Atome/Moleküle gebunden sind.

Sie sind nach der Schrödinger-Gleichung (1926) statistisch im Cluster verteilt und können frei im Cluster-Verbund vagabundieren. In festen van-der-Waals-Clustern (wie z.B. Metallen) bezeichnet man sie in ihrer Gesamtheit als Elektronengas, z.B. verantwortlich für die elektrische Leitfähigkeit von Metallen.

Dem Wasser wird durch den unten beschriebenen Prozess Elektronen entzogen. Ein Elektronenmangel in den Clustern (unsauber als Proton bezeichnet) führt nicht zur Instabilität des Clusterverbandes, sondern wird über den Grotthus-Mechanismus (1820) durch sog. Protonenhopping ausgeglichen.

Zur Frage der Interaktionen von Wasser und elektrischer Ladung gibt es ein bekanntes Experiment, in dem die Ablenkung eines dünnen Wasserstrahls durch einen elektrostatisch geladenen Gegenstand in anschaulicher Weise gezeigt werden kann. Durch die elektrostatische Ladung des Gegenstandes werden die Dipole und Ladungen in den Wasserclustern ausgerichtet. Da sich gegensinnige Ladungen anziehen, biegt sich der Wasserstrahl zum geladenen Gegenstand hin.

Das erfindungsgemäße Verfahren beruht auf elektrostatischer Induktion oder Influenz. Dabei führt eine Bewegung im elektrischen Feld zur Trennung von Ladungen, der Influenz.

Die Gewinnung des mittels Influenzverfahren behandelten Wassers zur Durchführung einer physikalischen Pflanzen-Behandlung mittels elektrostatischer Ladung wird wie folgt gewonnen:
Cluster-Wasser, dessen Leitfähigkeit durch den Zusatz von Kochsalz auf einen Sollwert eingestellt ist, fließt in einem elektrostatischen Feld (ruhendes elektrisches Feld), das durch eine Anode und eine Kathode gebildet wird.

Im ersten Schritt kommt es zur Ausrichtung der Ladungen und freien Elektronen im elektrischen Feld.

Durch die Bewegung und die daraus folgende Influenz werden in einem zweiten Schritt die Ladungen getrennt und abgeführt

Die Fraktion mit einem Mangel an Elektronen wird als zu nutzendes Konzentrat abgeführt und gesammelt, das Ergebnis ist eine de-elektronisierte (positiv geladene) Fraktion.

Man erhält ein elektrostatisch positiv geladenes Wasser. Es hat einen hohen Bedarf, die ungeladenen Positionen in den Clustern zu füllen. Im Kontakt mit elektronenreichen Oberflächen gibt es einen elektrischen Schlag, der zum Ladungsausgleich führt.

Messung und Nachweis der positiven elektrostatischen Ladung

Problematisch ist, dass es zurzeit kein Messverfahren gibt, eine positive elektrostatische Ladung im Wasser zu messen. Mangels besserer Methoden und aus historischen Gründen behilft man sich daher mit der DPD-Methode, d.h. der Messung der oxidativen Veränderung des Farbstoffes DPD durch Elektronenentzug durch das zu messende Oxidationsmittel. Je nach verwendetem Messgerät wird die "Oxidationskraft" als Konzentration von Wasserstoffperoxid (H₂O₂), Ozon (O₃) oder freiem Chlor ausgedrückt. Die "Chlormessung" ist die am weitesten verbreitete Methode. Sie dient auch zurzeit als einfache vor-Ort-Methode dazu, Konzentrationen zu bestimmen und einzustellen.

Das DPD (N,N-Diethyl-1,4-phenylendiamin) ist ein Farbkomplex, der bei Abgabe von Elektronen von farblos in Rot wechselt, bei der Wiederaufnahme von Elektronen dann wieder von Rot in farblos. Es findet keine chemische Verbindung des Farbstoffes mit Chlor, Ozon oder Wasserstoffperoxid statt, sondern diese entziehen aufgrund ihrer Eigenschaft als Oxidantien lediglich Elektronen.

Das bei dem Verfahren zur physikalischen Pflanzen-Behandlung mittels elektrostatischer Ladung verwendete mittels Influenzverfahren behandelte Wasser hat nach dieser Messmethode eine elektrostatische Ladung, die einem Äquivalent an freiem Chlor von etwa 150 ppm entspricht.

Da das Verfahren entfernte Ähnlichkeit mit bekannten Elektrolyseverfahren hat, sollte untersucht werden, ob der Elektronenentzug zu den für Elektrolyse typischen ungepaarten Elektronen, d.h. zur Radikal-Bildung führt. Dazu wurde mittels der Elektronen-Spin-Resonanz-Methode nach Molekülen oder Ionen mit ungepaarten Elektronen im aktivierten Wasser gesucht. Mit der Elektronen-Spin-Resonanz (ESR) lassen sich Moleküle oder Ionen mit Gesamtelektronenspin ungleich Null nachweisen und quantifizieren. Das Verfahren ist auch unter dem Namen EPR (für Electron Paramagnetic Resonance) bekannt.

Im direkten Nachweisverfahren konnten keine ungepaarten Elektronen nachgewiesen werden. Die Menge der ungepaarten Elektronen lag unter der Nachweisgrenze von 10¹⁰ Spin/Gauß.

Im Anschluss wurde unter Verwendung zweier sog. Spin Traps versucht, ungepaarte Elektronen nachzuweisen. Verwendet wurden DMPO und PBN. Diese Substanzen reagieren auf Moleküle mit ungepaarten Elektronen und ergeben entsprechende Resonanzen.

Auch mit den Spin Traps konnten keine ungepaarten Elektronen nachgewiesen werden.

Mit dem nun folgenden Beispiel wird die Wirksamkeit des Verfahrens zur physikalischen Pflanzenbehandlung verdeutlicht.

Beispiel 1: In-vivo-Test an Botrytis cinerea (Grauschimmel der Gurke):
Eine Testwirksubstanzkonzentration von 50 % wird dadurch erhalten, dass man das mittels Influenzverfahren behandelte Wasser zur physikalischen Pflanzenbehandlung mit Wasser so verdünnt, dass man zu der gewünschten Wirksubstanzkonzentration gelangt. Gurkenpflanzen (Sorte: Marketer) in Aufzuchtschalen, die auf einer Torferde-Puzzolanerde-Substrat (50/50) ausgesät und bei 18 bis 20 °C herangezogen wurden, werden im Keimblattstadium Z11 dadurch behandelt, dass man sie mit dem oben beschriebenen mittels Influenzverfahren behandelten Wasser besprüht. Als Kontrollen verwendete Pflanzen werden mit einer wässrigen Lösung, die kein mittels Influenzverfahren behandeltes Wasser enthält, besprüht.

Nach 24 Stunden werden die Pflanzen dadurch inokuliert, dass man Tropfen einer wässrigen Suspension von Botrytis cinerea-Sporen (150 000 Sporen pro ml) auf die Blattoberseite ablegt. Die Sporen stammen von einer 15 Tage alten Kultur und sind in einer Nährlösung suspendiert, die folgende Zusammensetzung aufweist:
20 g/l Gelatine
50 g/l Rohrzucker
2g/l NH₄NO₃
1 g/l KH₂PO₄.

Die inokulierten Gurkenpflanzen werden 5/7 Tage in einer Klimakammer bei 15 bis 11°C (Tag/Nacht) und 80 % relativer Luftfeuchtigkeit stehen gelassen.

5/7 Tage nach der Inokulation wird im Vergleich mit den Kontrollpflanzen bonitiert. Unter diesen Bedingungen beobachtet man mit einer 50 %igen Konzentration des mittels Influenzverfahren behandelten Wassers in dem Wasser einen guten (mindestens 50 %igen) Schutz.

Das Verfahren zur physikalischen Pflanzen-Behandlung ermöglicht eine umfassende und effektive Bekämpfung von Erkrankungen bei Pflanzen und vermeidet dabei gleichzeitig toxikologische Belastungen für die Umwelt.

## Patentansprüche

1. Verfahren zur physikalischen Pflanzen-Behandlung mittels elektrostatischer Ladung, bei dem eine Übertragung der elektrostatischen Ladung über ein mittels Influenzverfahren behandeltes Wasser erfolgt, wobei das Wasser durch die Behandlung mittels Influenzverfahren Wassercluster mit einem Elektronenmangel aufweist, wobei das mittels Influenzverfahren behandelte Wasser durch folgende Verfahrensschritte erhältlich ist:
Einbringen des zu behandelnden Wassers in ein elektrischen Feld, Ausrichtung der Ladungen und freien Elektronen im elektrischen Feld, Trennung der Ladungen durch Bewegung und der daraus resultierender Influenz und
Sammlung und Abführung der de-elektronisierten, positiv geladenen Fraktion, wobei die positiv geladene Fraktion ein elektrostatisch positiv geladenes Wasser enthält, das einen hohen Bedarf hat, die ungeladenen Positionen in den Clustern zu füllen und der Kontakt mit elektronenreichen Oberflächen einen elektrischen Schlag erzeugt, der zum Ladungsausgleich führt.

2. Verfahren zur physikalischen Pflanzen-Behandlung mittels elektrostatischer Ladung nach Anspruch 1, **dadurch gekennzeichnet, dass** der Effekt des Verfahrens durch Behandlung des Wassers mit Röntgenstrahlung auslöschbar ist.

3. Verfahren zur physikalischen Pflanzen-Behandlung mittels elektrostatischer Ladung nach Anspruch 1 oder 2, **dadurch gekennzeichnet, dass** das Verfahren eine fungizide und/oder bakterizide und/oder viruzide und/oder sporozide Wirkung aufweist.

4. Verfahren zur physikalischen Pflanzen-Behandlung mittels elektrostatischer Ladung nach einem der vorhergehenden Ansprüche, **dadurch gekennzeichnet, dass** das Wasser Natriumchlorid umfasst.

5. Verfahren zur physikalischen Pflanzen-Behandlung mittels elektrostatischer Ladung nach einem der vorhergehenden Ansprüche, **dadurch gekennzeichnet, dass** die Influenz mit einer Stromdichte von 0,5 bis 10 W pro cm² durchführbar ist.

6. Verfahren zur physikalischen Pflanzen-Behandlung mittels elektrostatischer Ladung nach einem der vorhergehenden Ansprüche zur Bekämpfung von Pilzerkrankungen und/oder viralen Erkrankungen und/oder bakteriellen Erkrankungen und/oder Sporenerkrankungen.

7. Verfahren zur physikalischen Pflanzen-Behandlung mittels elektrostatischer Ladung nach einem der vorhergehenden Ansprüche zur Bekämpfung von Pilzerkrankungen bei Pflanzen.

8. Verfahren zur physikalischen Pflanzen-Behandlung mittels elektrostatischer Ladung nach Anspruch 6 oder 7, wobei es sich bei der Pilzerkrankung um Botrytis und/oder Krautfäule handelt.

9. Verfahren für die vorbeugende und/oder kurative Bekämpfung von phytopathogenen Erregern, **dadurch gekennzeichnet, dass** man eine wirksame, nicht phytotoxische Menge eines mittels Influenzverfahren behandelten Wassers nach einem der vorhergehenden Ansprüche auf die Pflanzensamen und/oder Pflanzenblätter und/oder Früchte der Pflanzen und/oder auf den Boden, auf dem die Pflanzen wachsen und/oder wachsen sollen, aufbringt.

10. Verfahren für die vorbeugende und/oder kurative Bekämpfung von phytopathogenen Erregern nach Patentanspruch 9, wobei es sich bei den Erregern um Pilze und/oder Viren und/oder Bakterien und/oder Sporen handelt.

## Claims

1. Method for physical treatment of plants by means of electrostatic charge, wherein a transfer of the electrostatic charge takes place via water treated by means of an influence process, wherein the water comprises water clusters having an electron deficit due to the treatment by means of an influence process, wherein the water treated by means of an influence process can be obtained by the following process steps:
introducing the water to be treated into an electric field,
aligning the charges and free electrons in the electric field, separating the charges by motion and by the influence resulting therefrom and
collecting and discharging the de-electronised positively-charged fraction, wherein the positively-charged fraction comprises an electrostatically charged water, which has a high requirement to fill the uncharged positions into the clusters and whereby the contact with electron-rich surfaces causes an electric shock, which leads to a charge balancing.

2. Method for physical plant treatment by means of electrostatic charge according to claim 1, **characterised in that** the effect of the method is erasable by treatment of the water with X-rays.

3. Method for physical plant treatment by means of electrostatic charge according to claim 1 or 2, **characterised in that** the method has a fungicidal and/or bactericidal and/or virucidal and/or sporicidal effect.

4. Method for physical plant treatment by means of electrostatic charge according to any one of the preceding claims **characterised in that** the water contains sodium chloride.

5. Method for physical plant treatment by means of electrostatic charge according to any one of the preceding claims, **characterised in that** the induction can be performed at a current density of from 0,5 to 10 W per cm².

6. Method for physical plant treatment by means of electrostatic charge according to any one of the preceding claims for the control of fungal diseases and/or viral diseases and/or bactericidal diseases and/or spore diseases.

7. Method for physical plant treatment by means of electrostatic charge according to any one of the preceding claims for the control of fungal diseases in plants.

8. Method for physical plant treatment by means of electrostatic charge according to claim 6 or 7, the fungal disease being Botrytis and/or leaf blight.

9. Method for the preventive and/or curative control of phytopathogenic organisms, **characterised in that** an effective, non phytotoxic quantity of water treated by means of an influence process according to any one of the preceding claims is applied to plant seed and/or plant leaves and/or plant fruit and/or to the soil, in which the plants are growing and/or are supposed to grow.

10. Method for the preventive and/or curative control of phytopathogenic organisms according to patent claim 9, wherein the pathogens are fungi and/or viruses and/or bacteria and/or spores.

## Revendications

1. Procédé pour le traitement physique de plantes à l'aide d'une charge électrostatique, procédé dans lequel un transfert de la charge électrostatique est réalisé par l'intermédiaire d'une eau traitée par un procédé par influence électrique, l'eau comportant, sous l'effet du traitement par le procédé par influence électrique, des agrégats d'eau ayant un manque d'électrons, l'eau traitée par le procédé par influence électrique pouvant être obtenue par les étapes suivantes :
introduction de l'eau à traiter dans un champ électrique,
orientation des charges et des électrons libres dans le champ électrique,
séparation des charges, sous l'effet de leur mouvement et de l'influence qui en résulte, et
collecte et évacuation de la fraction positivement chargée, désélectronisée, la fraction positivement chargée contenant une eau ayant une charge électrostatique positive, qui présente un besoin élevé consistant à remplir les positions non chargées dans les agrégats, et le contact avec des surfaces riches en électrons produisant un choc électrique, qui conduit à l'égalisation des charges.

2. Procédé pour le traitement physique de plantes au moyen d'une charge électrostatique selon la revendication 1, **caractérisé en ce que** l'effet du procédé peut être effacé par traitement de l'eau avec un rayonnement X.

3. Procédé pour le traitement physique de plantes au moyen d'une charge électrostatique selon la revendication 1 ou 2, **caractérisé en ce que** le procédé présente un effet fongicide et/ou bactéricide et/ou virucide et/ou sporicide.

4. Procédé pour le traitement physique de plantes au moyen d'une charge électrostatique selon l'une des revendications précédentes, **caractérisé en ce que** l'eau comprend du chlorure de sodium.

5. Procédé pour le traitement physique de plantes au moyen d'une charge électrostatique selon l'une des revendications précédentes, **caractérisé en ce que** l'influence électrique peut être mise en oeuvre avec une densité de courant de 0,5 à 10 W par cm².

6. Procédé pour le traitement physique de plantes au moyen d'une charge électrostatique selon l'une des revendications précédentes pour la maîtrise de maladies fongiques et/ou de maladies virales et/ou de maladies bactériennes et/ou de maladies dues à des spores.

7. Procédé pour le traitement physique de plantes au moyen d'une charge électrostatique selon l'une des revendications précédentes, pour la maîtrise de maladies fongiques chez des plantes.

8. Procédé pour le traitement physique de plantes au moyen d'une charge électrostatique selon la revendication 6 ou 7, dans lequel, pour ce qui concerne la maladie fongique, il s'agit de botrytis et/ou du mildiou des fanes.

9. Procédé pour la maîtrise préventive et/ou curative de microorganismes pathogènes phytopathogènes, **caractérisé en ce qu'**on applique une quantité efficace, non phytotoxique, d'une eau traitée par le procédé par influence électrique selon l'une des revendications précédentes, sur les graines de plantes et/ou les feuilles de plantes et/ou les fruits des plantes et/ou sur le sol sur lequel les plantes croissent et/ou doivent croître.

10. Procédé pour la maîtrise préventive et/ou curative de microorganismes pathogènes phytopathogènes selon la revendication 9, dans lequel, pour ce qui concerne les microorganismes pathogènes, il s'agit de champignons et/ou de virus et/ou de bactéries et/ou de spores.
